# EUROPÄISCHE PATENTSCHRIFT

(11) **EP 2 643 569 B1**
(45) Veröffentlichungstag und Bekanntmachung des Hinweises auf die Patenterteilung: **08.07.2015**
(21) Anmeldenummer: 11776805.1
(22) Anmeldetag: 02.11.2011
(51) Int. Cl.: F01N 13/18, F01N 1/00

(54) **SCHALLDÄMPFER**
SILENCER
SILENCIEUX

(30) Priorität: 26.11.2010 DE 102010062049
(43) Veröffentlichungstag der Anmeldung: 02.10.2013
(73) Patentinhaber: Eberspächer Exhaust Technology GmbH & Co. KG, 66539 Neunkirchen (DE)
(72) Erfinder: REINHEIMER, Thomas, 66128 Saarbrücken (DE); SCHMIDT, Michael, 66299 Friedrichsthal (DE)
(74) Vertreter: BRP Renaud & Partner mbB Rechtsanwälte Patentanwälte Steuerberater
(86) Internationale Anmeldenummer: PCT/EP2011/069229
(87) Internationale Veröffentlichungsnummer: WO 2012/069292

(56) Entgegenhaltungen:
- US-A- 4 360 076

## Beschreibung

Die vorliegende Erfindung betrifft einen Schalldämpfer für eine Abgasanlage einer Brennkraftmaschine, insbesondere eines Kraftfahrzeugs, mit den Merkmalen des Oberbegriffs des Anspruchs 1.

Üblicherweise umfasst ein Schalldämpfer ein Schalldämpfergehäuse, das einen Gehäuseinnenraum umschließt, wobei im Gehäuseinnenraum zumindest ein abgasführender Hohlkörper angeordnet ist, bspw. in Form eines Rohrs, insbesondere in Form eines Umlenkrohrs oder in Form eines X- oder Y-Rohrs.

Für die Herstellung derartiger Hohlkörper gibt es unterschiedliche Möglichkeiten. Sie können bspw. tiefgezogen sein oder in Wickelbauweise hergestellt sein. Ebenso ist eine Halbschalenbauweise möglich, bei der zwei Halbschalen des Hohlkörpers im Bereich einer Trennebene aneinander befestigt sind.

Aus der US 4,360,076 A ist ein Schalldämpfer für eine Abgasanlage einer Brennkraftmaschine bekannt, bei dem ein Schalldämpfergehäuse einen Gehäuseinnenraum umschließt, in dem ein abgasführenden Hohlkörper in Halbschalenbauweise angeordnet ist. Die beiden Halbschalen des Hohlkörpers sind im Bereich einer Trennebene aneinander befestigt durch Befestigungselemente, die unmittelbar an den Halbschalen ausgebildet sind. Hierzu weisen die beiden Halbschalen im Bereich der Trennebene an voneinander entfernten Seiten jeweils einen nach außen abstehenden Kragen auf, an denen die Befestigungselemente ausgebildet sind, wobei die beiden Halbschalen an diesen Kragen aneinander anliegen und aneinander befestigt sind. Dabei weist jeweils einer der Kragen eine von der Trennebene beabstandete Lasche als Befestigungselement auf, die sich parallel zur Trennebene in der Längsrichtung des jeweiligen Kragens erstreckt und dabei den zugehörigen Kragen der anderen Halbschale in einem als komplementäres Befestigungselement dienenden Kragenabschnitt übergreift. Beim bekannten Schalldämpfer umgreift der jeweilige Kragen der einen Halbschale den zugehörigen komplementären Kragenabschnitt der anderen Halbschale nach Art einer Bördelverbindung.

Die vorliegende Erfindung beschäftigt sich mit dem Problem, für einen derartigen Schalldämpfer eine verbesserte Ausführungsform anzugeben, die sich insbesondere durch eine besonders preiswerte Herstellbarkeit auszeichnet.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, bei einem Hohlkörper in Halbschalenbauweise die beiden Halbschalen unmittelbar aneinander mechanisch zu fixieren, ohne dass hierzu zusätzliche Befestigungsmittel verwendet werden müssen. Hierzu schlägt die Erfindung vor, an den Halbschalen Befestigungsbereiche bzw. Befestigungselemente, welche zur mechanischen Verbindung der beiden Halbschalen miteinander zusammenwirken, unmittelbar, also integral an den Halbschalen auszuformen. Diese Befestigungsbereiche oder Befestigungselemente können dabei nach Art einer Steckverbindung oder Klippsverbindung oder Rastverbindung oder durch eine Kombination vorstehender Verbindungstechniken zusammenwirken, um die beiden Halbschalen aneinander zu fixieren. Hierdurch ergibt sich eine besonders einfache Handhabung für den Zusammenbau des Hohlkörpers, da alle benötigten Befestigungselemente unmittelbar an den Halbschalen ausgebildet sind, wodurch zusätzliche, separate Befestigungselemente entfallen können. Insbesondere kann auf eine aufwendige Verschraubung oder auf eine aufwendige Schweißverbindung verzichtet werden. Es ist klar, dass grundsätzlich nicht ausgeschlossen werden soll, dass zusätzlich zu den integral an den Halbschalen ausgebildeten Befestigungselementen weitere, separate Befestigungselemente, wie z. Bsp. Klammern oder Schrauben oder Schweißpunkte oder Schweißnähte zur Anwendung kommen können, um die Montage des Hohlkörpers zu komplettieren. Der besondere Vorteil der hier vorgestellten Erfindung wird jedoch darin gesehen, dass die Fixierung der beiden Halbschalen aneinander ausschließlich durch die unmittelbar an den Halbschalen bereits vorhandenen Befestigungselemente realisiert werden kann. Bevorzugt ist daher eine Ausführungsform, bei der die beiden Halbschalen ohne separate, also zusätzlich zu den Halbschalen vorgesehene Befestigungsmittel aneinander befestigt sind. Somit lässt sich der Hohlkörper besonders einfach zusammenbauen und preiswert realisieren.

Besonders vorteilhaft ist bei der Erfindung, dass die beiden Halbschalen im Bereich der Trennebene an voneinander entfernten Seiten jeweils einen nach außen abstehenden Kragen aufweisen, wobei an diesem Kragen die Befestigungselemente ausgebildet sind und wobei die beiden Halbschalen an diesen Kragen aneinander anliegen und aneinander befestigt sind. Die Kragen definieren die Relativlage zwischen den beiden Halbschalen und eignen sich in besonderer Weise zur Anordnung der Befestigungselemente, da sie sich außerhalb eines vom Hohlkörper umschlossenen Hohlraums befinden und dementsprechend die Abgasführung im Hohlkörper nicht beeinträchtigen.

Erfindungsgemäß weist zumindest einer der Kragen der einen Halbschale eine von der Trennebene beabstandete Lasche als Befestigungselement auf, die sich parallel zur Trennebene in der Längsrichtung des jeweiligen Kragens erstreckt und dabei den zugehörigen Kragen der anderen Halbschale in einem als komplementäres Befestigungselement dienenden Kragenabschnitt übergreift. Die Lasche erzeugt mit dem zugehörigen Kragenabschnitt, den sie übergreift, einen Formschluss, der die beiden Halbschalen sicher aneinander festlegt. Hierdurch lässt sich insbesondere eine Ausführungsform realisieren, bei der die Laschen und die zugehörigen Kragenabschnitte nach Art eines Bajonett-Verschlusses zusammenwirken, der sich dadurch charakterisiert, dass zwei unterschiedlich orientierte Bewegungen durchgeführt werden müssen, um die beiden Halbschalen aneinander zu befestigen bzw. voneinander zu lösen. Beim Befestigen müssen die beiden Halbschalen in einer ersten Richtung relativ zueinander gesteckt werden, um die Laschen des einen Kragens unmittelbar an den zugehörigen Kragenabschnitten des anderen Kragens zu positionieren. Anschließend müssen die beiden Halbschalen in einer zweiten Richtung relativ zueinander bewegt werden, damit die Laschen die zugehörigen Kragenabschnitte übergreifen können.

Bevorzugt ist eine Ausführungsform, bei welcher der zugehörige Kragen der anderen Halbschale zumindest eine Unterbrechung aufweist, durch welche die Lasche beim Zusammenbau des Hohlkörpers senkrecht zur Trennebene, also quer zur Längsrichtung des jeweiligen Kragens hindurchführbar ist. Hierdurch wird eine Art Steck-Schiebe-Kopplung realisiert, bei der die beiden Halbschalen in einer ersten Relativlage zueinander senkrecht zur Trennebene bewegt werden müssen, damit die jeweilige Lasche die zugehörige Unterbrechung durchdringen kann. Diese erste Relativbewegung oder Steckbewegung folgt dabei senkrecht zur Trennebene. Sobald die beiden Halbschalen dann über ihre Kragen in der Trennebene aneinander anliegen, erfolgt eine zweite Relativbewegung in der Längsrichtung des jeweiligen Kragens, die in der Trennebene liegt, damit die jeweilige Lasche den zugehörigen Kragenabschnitt hintergreifen kann. Diese zweite Relativbewegung oder Schiebebewegung überführt die beiden Halbschalen in eine weitere Relativlage zueinander, die dem montierten Endzustand entspricht.

Besonders einfach in der Herstellung ist dabei eine Ausführungsform, bei der die jeweilige Unterbrechung an einer vom gasführenden Inneren des Hohlkörpers abgewandten Außenseite seitlich offen ist. In diesem Fall lassen sich beispielsweise, Herstellungstoleranzen vergleichsweise grob einstellen.

Gemäß einer weiteren Ausführungsform kann die jeweilige Lasche bezüglich der Längsrichtung des jeweiligen Kragens einen Anfangsbereich oder Endbereich des zugehörigen Kragens der anderen Halbschale übergreifen. Je nach Dimension des Kragens ist somit keine Unterbrechung des Kragens erforderlich, durch welche die Lasche hindurchsteckbar ist, vielmehr kann auch ein gegenüber dem die Lasche aufweisenden Kragen verkürzter Kragen am Anfangsbereich bzw. am Endbereich ausreichend Freiraum zur Verfügung stellen, durch den die jeweilige Lasche am zu übergreifenden Kragenabschnitt während des Steckvorgangs vorbeigeführt werden kann, um ihn dann während des Schiebevorgangs zu übergreifen.

Gemäß einer bevorzugten Ausführungsform kann vorgesehen sein, dass die jeweilige Lasche den zugehörigen Längsabschnitt in der Längsrichtung übergreift. Vorzugsweise übergreift die jeweilige Lasche den zugehörigen Längsabschnitt ausschließlich in der Längsrichtung. Durch diese Bauweise vereinfacht sich der Zusammenbau, da die beiden Halbschalen zunächst nur quer zur Längsrichtung der Kragen gesteckt werden müssen, um die Laschen des einen Kragens unmittelbar vor dem zugehörigen Längsabschnitt des anderen Kragens zu positionieren, wobei die Laschen insbesondere die zugehörigen Unterbrechungen des anderen Kragens durchdringen. Anschließend werden die beiden Halbschalen in der Längsrichtung der Kragen gegeneinander verschoben, so dass die Laschen auf die zugehörigen Längsabschnitte aufgeschoben werden, um diese in der Längsrichtung zu übergreifen.

Besonders vorteilhaft ist es dabei, wenn die jeweilige Lasche am zugehörigen Längsabschnitt nur kraftschlüssig und/oder formschlüssig festgelegt ist, so dass auf zusätzliche, separate Befestigungsmittel verzichtet werden kann. Hierdurch wird der Hohlkörper einfach montierbar und preiswert herstellbar.

Entsprechend einer anderen Ausführungsform kann der zugehörige Kragen der anderen Halbschale in dem von der Lasche übergriffenen Kragenabschitt zumindest einen senkrecht zur Trennebene in Richtung zur Lasche abstehenden Vorsprung aufweisen. Mit Hilfe dieses Vorsprungs kann eine Klemmwirkung erzeugt bzw. verstärkt werden, welche die Reibung zwischen Lasche und übergriffenem Kragenabschnitt erhöht. Hierdurch kann die Fixierung der beiden Halbschalen aneinander verbessert werden.

Der genannte Vorsprung kann bspw. durch einen Prägevorgang am jeweiligen Kragen integral ausgeformt sein, was die Herstellung des Vorsprungs bzw. der Halbschale vereinfacht.

Besonders vorteilhaft ist es nun, wenn die jeweilige Lasche eine Rastkontur aufweist, die mit dem jeweiligen Vorsprung verrastet. Durch die Verrastung zwischen Lasche und Vorsprung wird ein Formschluss auch in der Schieberichtung, also in der Längsrichtung der Laschen, die in der Trennebene liegt, erzielt, wodurch die Montageendlage zwischen den beiden Halbschalen gesichert ist.

Bei einer weiteren vorteilhaften Ausführungsform kann die jeweilige Lasche vom jeweiligen Kragen ausgestellt sein. Mit anderen Worten, die jeweilige Lasche ist durch Freischneiden oder Freistanzen und Ausstellen unmittelbar bzw. integral durch einen Abschnitt der Lasche gebildet, was die Herstellung der jeweiligen Halbschale vereinfacht.

Besonders vorteilhaft ist eine Ausführungsform, bei der mehrere Laschen am selben Kragen in der Längsrichtung des Kragens voneinander beabstandet angeordnet sind. Hierdurch können mehrere Befestigungspunkte oder Befestigungsstellen realisiert werden, die entlang der aneinander anliegenden Kragen in der Kragenlängsrichtung voneinander beabstandet sind. Dies führt zu einer besonders effektiven Fixierung der beiden Halbschalen aneinander.

Gemäß einer weiteren vorteilhaften Ausführungsform kann jeder Kragen der einen Halbschale zumindest eine Lasche aufweisen. Dies führt dazu, dass jeder Kragen der anderen Halbschale zumindest einen für die jeweilige Lasche übergreifbaren Kragenabschnitt aufweist. Durch diese Bauweise vereinfacht sich die Montage des Hohlkörpers, da die Gefahr von Verwechslungen der Halbschalen reduziert ist. Die eine Halbschale besitzt sämtliche Laschen, während die andere Halbschale keine Lasche besitzt. Hierdurch wird sowohl ein manuelles als auch ein maschinell durchgeführtes Zusammenbauen der beiden Halbschalen vereinfacht.

Entsprechend einer anderen Ausführungsform kann jeder Kragen der einen Halbschale mindestens zwei Laschen aufweisen, während die Kragen der anderen Halbschale jeweils mindestens eine Unterbrechung aufweisen. Während die jeweilige erste Lasche dann mit der jeweiligen Unterbrechung zusammenwirkt, kann die jeweilige zweite Lasche dann mit einer weiteren Unterbrechung oder aber mit einem Anfangsbereich oder Endbereich der jeweiligen Lasche zusammenwirken.

Entsprechend einer anderen Ausführungsform kann der Hohlkörper zumindest einen Abgaseinlass und zumindest einen Abgasauslass aufweisen, die jeweils von der Trennebene geteilt sind, und zwar vorzugsweise hälftig. Insbesondere liegen der Abgaseinlass bzw. der Abgasauslass in einer Ebene, die senkrecht zur Trennebene verläuft. An der jeweiligen Halbschale ist zweckmäßig ein Randabschnitt für den Abgaseinlass bzw. für den Abgasauslass ausgeformt, der in der Umfangsrichtung 180° des Abgaseinlasses bzw. des Abgasauslasses umgreift.

Ein besonders einfacher Aufbau ergibt sich, wenn die beiden Halbschalen unmittelbar den jeweiligen Abgaseinlass und den jeweiligen Abgasauslass bilden bzw. definieren, so dass auf weitere Bauteile, wie Endböden oder Endplatten, verzichtet werden kann, die eine Öffnung enthalten, um einen Einlass oder einen Auslass zu bilden.

Bevorzugt kann es sich beim Hohlkörper um ein gerades Rohr oder um ein gebogenes Umlenkrohr oder um ein Y-Rohr handeln. Während einfache Rohre genau einen Einlass und genau einen Auslass aufweisen, besitzt ein Y-Rohr entweder zwei Einlässe und einen Auslass oder einen Einlass und zwei Auslässe. Grundsätzlich kann auch ein X-Rohr einen derartigen Hohlkörper bilden, das zwei Einlässe und zwei Auslässe aufweist.

Zumindest eine der Halbschalen kann mit einer Perforation ausgestattet sein, wodurch der jeweilige Hohlkörper innerhalb des Schalldämpfers bspw. durch eine Absorptionskammer oder durch eine Resonanzkammer oder durch eine Expansionskammer hindurch geführt sein kann, um eine gewisse schalldämpfende Wirkung zu erzeugen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte Prinzipdarstellung eines Schalldämpfers mit einem Hohlkörper,
- Fig. 2: eine vereinfachte Draufsicht auf einen als Y-Rohr ausgestalteten Hohlkörper,
- Fig. 3: eine Draufsicht auf eine erste Halbschale des Hohlkörpers,
- Fig. 4: eine Draufsicht auf eine zweite Halbschale des Hohlkörpers,
- Fig. 5: eine Draufsicht auf die erste Halbschale im Bereich einer Lasche,
- Fig. 6: eine Seitenansicht auf den Hohlkörper während der Montage, bei verschiedenen Montagezuständen a bis c,
- Fig. 7 und 8: weitere Seitenansichten auf den Hohlkörper im Bereich einer Lasche bei verschiedenen anderen Ausführungsformen.

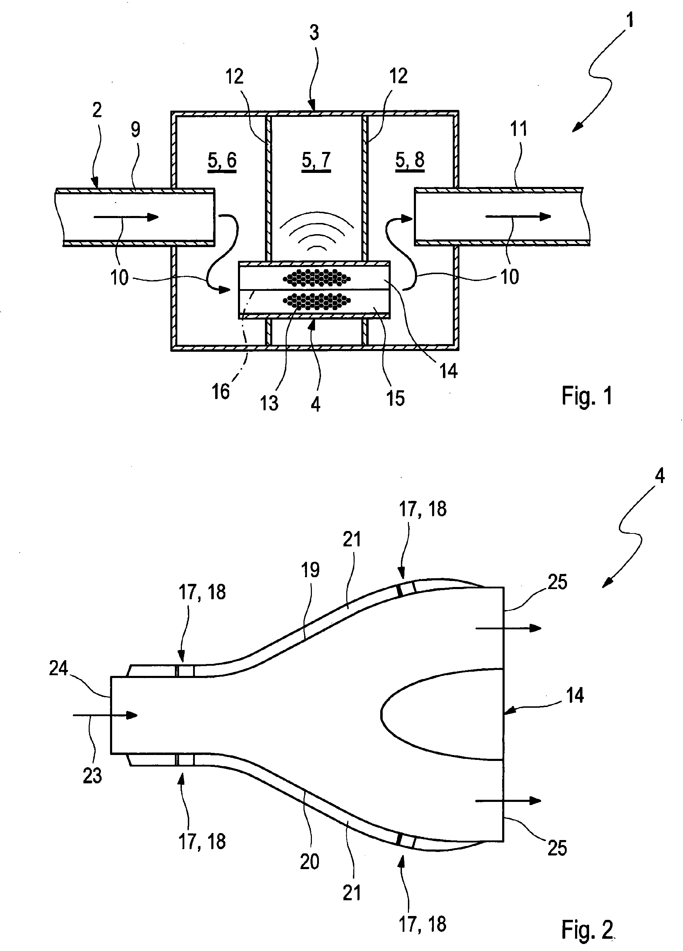

Entsprechend Fig. 1 umfasst ein Schalldämpfer 1 einer hier nur im Bereich des Schalldämpfers 1 gezeigten Abgasanlage 2, die zum Abführen von Abgasen einer hier nicht gezeigten Brennkraftmaschine dient, die zusammen mit der Abgasanlage 2 in einem Kraftfahrzeug angeordnet sein kann, ein Schalldämpfergehäuse 3 und zumindest einen Hohlkörper 4. Das Schalldämpfergehäuse 3 umschließt einen Gehäuseinnenraum 5, der bspw. in mehrere Kammern 6, 7, 8 unterteilt sein kann. Der Hohlkörper 4 ist im Gehäuseinnenraum 5 angeordnet und dient zur Abgasführung. Beispielsweise und ohne Beschränkung der Allgemeinheit kann an das Schalldämpfergehäuse 3 ein Einlassrohr 9 angeschlossen sein, durch welches Abgas entsprechend Pfeilen 10 in die als Einlasskammer oder Umlenkkammer dienende erste Kammer 6 des Gehäuseinnenraums 5 eintritt und durch den Hohlkörper 4 in die als Austrittskammer oder Umlenkkammer dienende dritte Kammer 8 des Gehäuseinnenraums 5 gelangt, von wo aus das Abgas über ein Auslassrohr 11 abgeführt wird. Der Hohlkörper 4 ist im Beispiel durch die als Absorptionskammer dienende zweite Kammer 7 des Gehäuseinnenraums 5 hindurchgeführt, die durch Zwischenwände 12 von den beiden anderen Kammern 6, 8 abgetrennt ist. Der Hohlkörper 4 kann im Bereich der zweiten Kammer 7 für Luftschall durchlässig ausgestaltet sein, bspw. mittels einer Perforation 13.

Der Hohlkörper 4 ist in Halbschalenbauweise gefertigt, so dass er zwei Halbschalen 14, 15 besitzt, die im Bereich einer Trennebene 16 aneinander anliegen und aneinander befestigt sind.

Entsprechend den Fig. 2 bis 4 kann es sich beim Hohlkörper 4 bspw. um ein Y-Rohr handeln. Ebenso kann es sich alternativ um ein X-Rohr handeln. Alternativ kann es sich beim Hohlkörper 4 auch um ein gebogenes Umlenkrohr oder aber um ein ungebogenes oder gerades Rohr handeln.

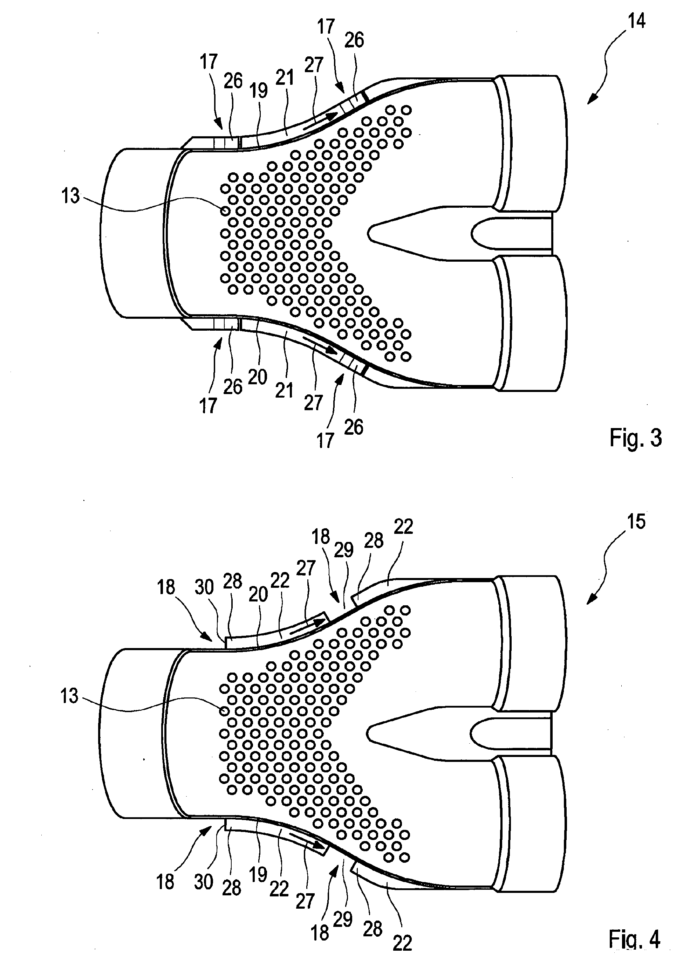

In den Fig. 3 und 4 ist außerdem die mit Bezug auf Fig. 1 vorgestellte Perforation 13 erkennbar.

Entsprechend den Fig. 2 bis 8 sind die Halbschalen 14, 15 mit Hilfe von Befestigungselementen 17, 18 aneinander befestigt, wobei diese Befestigungselemente 17, 18 unmittelbar an den Halbschalen 14, 15 ausgebildet sind. Insbesondere sind die Befestigungselemente 17, 18 integral an der jeweiligen Halbschale 14, 15 ausgeformt. Vorzugsweise sind die beiden Halbschalen 14, 15 ausschließlich über diese daran unmittelbar ausgebildeten Befestigungselemente 17, 18 aneinander befestigt. Die Halbschalen 14, 15 sind bspw. Blechformteile, die jeweils mit den Befestigungselementen 17, 18 aus einem Blechstück hergestellt sind.

Zur Realisierung dieser integrierten Befestigungselemente 17, 18 weist jede Halbschale 14, 15 im Bereich der Trennebene 16 an voneinander entfernten Seiten 19, 20 jeweils einen nach außen abstehenden Kragen 21 bzw. 22 auf, nämlich an der einen oder ersten Halbschale 14 je einen ersten Kragen 21 bzw. je einen zweiten Kragen 22 an der anderen oder zweiten Halbschale 15. An diesen Kragen 21, 22 sind die Befestigungselemente 17, 18 ausgebildet. Die genannten Seiten 19, 20 sind zweckmäßig quer zu einer in Fig. 2 durch einen Pfeil angedeuteten Durchströmungsrichtung 23 des Hohlkörpers 4 voneinander entfernt. Der Hohlkörper 4 besitzt somit zumindest einen Abgaseinlass 24 und wenigstens einen Abgasauslass 25. Im gezeigten Beispiel des als Y-Rohr ausgebildeten Hohlkörpers 4 ergeben sich aufgrund der hier angenommenen Durchströmungsrichtung 23 eine einzige Einlasslöffnung 24 und genau zwei Auslassöffnungen 25. Grundsätzlich ist auch eine entgegengesetzte Durchströmungsrichtung denkbar. Ferner sind im Beispiel sowohl die Einlassöffnung 24 als auch die beiden Auslassöffnungen 25 jeweils in Ebenen angeordnet, die senkrecht zur Trennebene 16 stehen. Zweckmäßig teilt die Trennebene 16 den jeweiligen Abgaseinlass 24 und den jeweiligen Abgasauslass 25 hälftig.

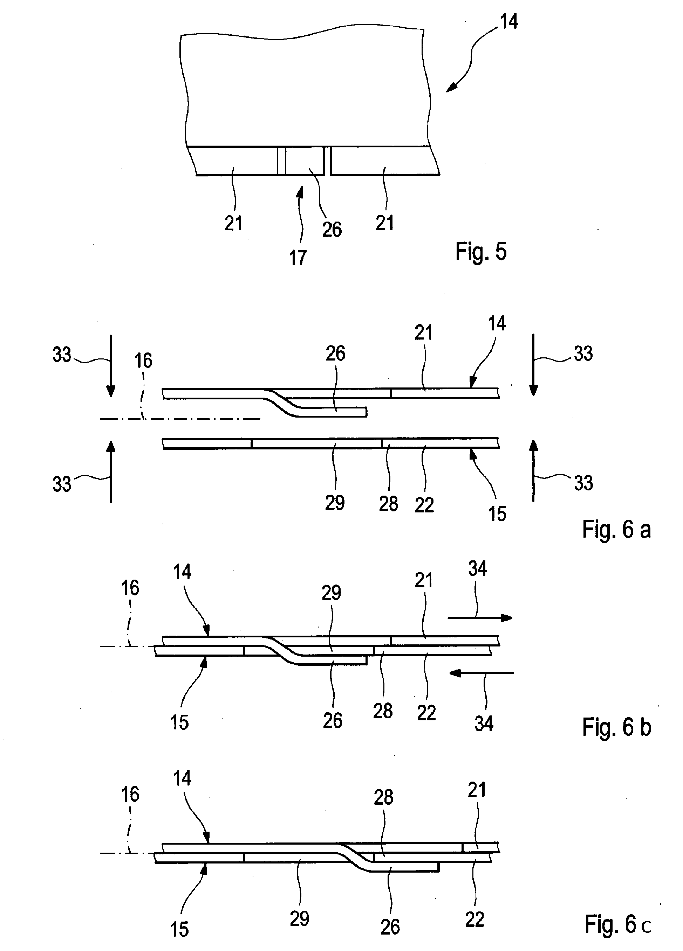

An den zuvor genannten Kragen 21, 22 liegen die beiden Halbschalen 14, 15 aneinander an, was insbesondere den Fig. 6 bis 8 entnehmbar ist. Ferner erfolgt die Befestigung der Halbschalen 14, 15 aneinander über diese Kragen 21, 22, so dass die Kragen 21, 22 aneinander befestigt sind.

Anhand der Fig. 3 bis 8 werden bevorzugte Ausführungsformen für die Befestigungselemente 17, 18 näher erläutert. Es ist klar, dass grundsätzlich auch andere Befestigungselemente 17, 18 zur Anwendung kommen können, die eine mechanische Fixierung der beiden Halbschalen 14, 15 aneinander ermöglichen und dabei ohne zusätzliche weitere Befestigungsmittel, wie z. Bsp. Klammern, Schrauben, Schweißverbindungen, auskommen.

Entsprechend den Fig. 3 bis 8 besitzen die beiden Kragen 21 der ersten Halbschale 14 jeweils zumindest eine Lasche 26. Im gezeigten, bevorzugten Beispiel besitzt der jeweilige Kragen 21 jeweils zwei derartige Laschen 26, so dass die erste Halbschale 14 im Beispiel vier derartige Laschen 26 aufweist. Die jeweilige Lasche 26 repräsentiert das jeweilige Befestigungselement 17 der ersten Halbschale 14. Die jeweilige Lasche 26 erstreckt sich parallel zur Trennebene 16 und davon beabstandet in der durch Pfeile 27 angedeuteten Längsrichtung des jeweiligen Kragens 21.

Gemäß Fig. 4 weist die zweite Halbschale 15 an ihren beiden Kragen 22 für jede Lasche 26 der ersten Halbschale 14 einen Kragenabschnitt 28 auf, der ein zur Lasche 26 bzw. zum ersten Befestigungselement 17 komplementäres zweites Befestigungselement 18 repräsentiert. Im montierten Zustand, der in den Fig. 6c, 7 und 8 erkennbar ist, übergreift die jeweilige Lasche 26 den zugeordneten Kragenabschnitt 28.

Damit die jeweilige Lasche 26 den zugehörigen Kragenabschnitt 28 übergreifen kann, besitzt der jeweilige Kragen 22 der zweiten Halbschale 15 z. B. zumindest eine Unterbrechung 29, die den jeweiligen Kragen 22 in seiner Kragenlängsrichtung 27 unterbricht und die so bemessen ist, dass die jeweilige Lasche 26 senkrecht zur Trennebene 16 und somit quer zur Längsrichtung 27 des jeweiligen Kragens 21 bzw. 22 durch die jeweilige Unterbrechung 29 hindurchgeführt werden kann. Die Kragen 22 der in Fig. 4 gezeigten Ausführungsform zeigen jeweils nur eine derartige Unterbrechung 29, an die jeweils einer der Kragenabschnitte 28 angrenzt. Die beiden anderen Kragenabschnitte 28 sind dagegen an einem Anfangsbereich 30 des jeweiligen Kragens 22 ausgebildet oder - je nach Orientierung der Längsrichtung 27 - an einem Endbereich des jeweiligen Kragens 22. Somit kann die zugehörige Lasche 26 ebenfalls senkrecht zur Trennebene 16 am zugehörigen Kragenabschnitt 28 vorbei bewegt werden.

Die Fig. 2 bis 4 zeigen somit Ausführungsformen, bei denen mehrere Laschen 26 am selben Kragen 21 in der Längsrichtung 27 des Kragens 21 voneinander beabstandet angeordnet sind. Im Beispiel sind je Kragen 21 genau zwei Laschen 26 in der Kragenlängsrichtung 27 voneinander beabstandet. Ferner sind gemäß den Fig. 3 und 4 die Laschen 26 ausschließlich an der ersten Halbschale 16 ausgebildet, während die den Laschen 26 zugeordneten Kragenabschnitte 28 hier ausschließlich an der zweiten Halbschale 15 ausgebildet sind.

Die Unterbrechungen 29 lassen sich einfach durch Ausstanzen oder Ausschneiden entsprechender Abschnitte des jeweiligen Kragens 22 realisieren. Die Laschen 26 lassen sich dagegen bspw. dadurch realisieren, dass innerhalb des jeweiligen Kragens 21 Längsabschnitte frei geschnitten oder frei gestanzt werden und anschließend ausgestellt werden, so dass die Laschen 26 integrale Bestandteile der Kragen 21 bilden.

Fig. 5 zeigt dabei die erste Halbschale 14 im Bereich einer solchen freigeschnittenen Lasche 26.

Entsprechend Fig. 6c kann die jeweilige Lasche 26 soweit von der Trennebene 16 beabstandet sein, dass der zugehörige Kragenabschnitt 28 mit einer senkrecht zur Trennebene 16 orientierten Vorspannung geklemmt bzw. eingespannt wird. In Verbindung mit der Haftreibung kann auf diese Weise eine Haltekraft parallel zur Trennebene 16 erzeugt werden, welche die aneinander montierten Halbschalen 14, 15 im montierten Zustand sichert.

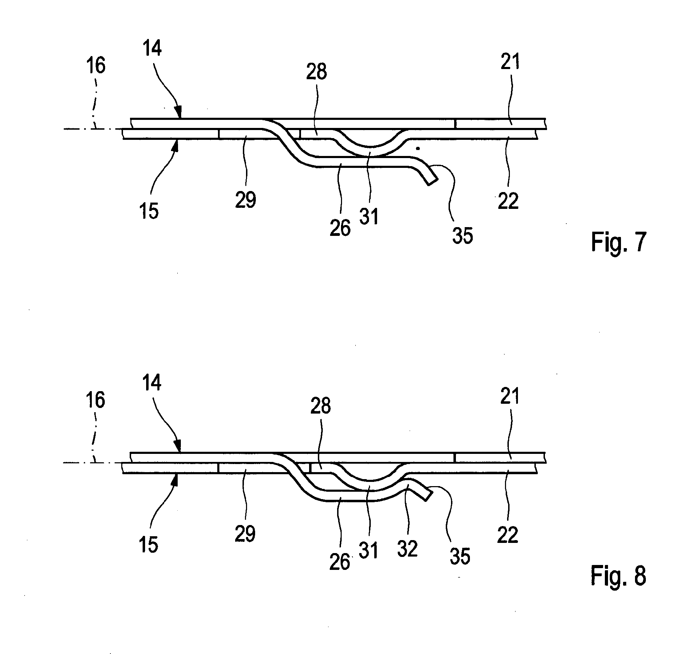

Um diese sichernde Haltekraft zu erhöhen, kann es gemäß den Fig. 7 und 8 vorgesehen sein, den jeweiligen Kragenabschnitt 28 mit zumindest einem Vorsprung 31 zu versehen, der senkrecht zur Trennebene 16 in Richtung zur Lasche 26 absteht. Auf diese Weise wird die Lasche 26 beim Überfahren des Kragenabschnitts 28 durch den Vorsprung 31 in einer von der Trennebene 16 weggerichteten Richtung verdrängt, was die Vorspannung erhöht, mit welcher die Lasche 26 am Kragenabschnitt 28 bzw. an deren Vorsprung 31 senkrecht zur Trennebene 16 abgestützt ist. Ein derartiger Vorsprung 31 kann bspw. mit Hilfe eines Prägevorgangs integral am jeweiligen Kragenabschnitt 28 ausgeformt werden.

Gemäß Fig. 8 kann die jeweilige Lasche 26 entsprechend einer besonders vorteilhaften Ausführungsform mit einer Rastkontur 32 ausgestattet sein, die so geformt ist, dass sie mit dem jeweiligen Vorsprung 31 verrasten kann, sobald die beiden Halbschalen 14, 15 ihre Montageposition erreichen. Beispielsweise steht die Rastkontur 32 von der zugehörigen Lasche 26 in Richtung Trennebene 16 ab, wodurch die Rastkontur 32 den jeweiligen Vorsprung 31 hintergreifen kann. Hierdurch entsteht in einer Richtung parallel zur Trennebene 16 ein Formschluss.

Zusätzlich oder alternativ zum jeweiligen Vorsprung 31 und/oder zur jeweiligen Rastkontur 32 kann zumindest eine Einführschräge 35 vorgesehen sein, die in den Beispielen der Fig. 7 und 8 jeweils am freien Ende der Lasche 26 ausgeformt ist, um das Aufstecken der jeweiligen Lasche 26 auf den zugehörigen Kragenabschnitt 28 zu vereinfachen.

Der Montagevorgang, durch den die beiden Halbschalen 14, 15 aneinander befestigt werden, um den Hohlkörper 4 zu bilden, wird nachfolgend anhand der Fig. 6a bis 6c näher erläutert.

Entsprechend Fig. 6a werdend die beiden Halbschalen 14, 15 zum Einstellen einer Ausgangsposition zunächst relativ zueinander so positioniert, dass die jeweilige Lasche 26 senkrecht zur Trennebene 16 fluchtend zur zugehörigen Unterbrechung 29 ausgerichtet ist. Dann werden die beiden Halbschalen 14, 15 entsprechend Pfeilen 33 senkrecht zur Trennebene 16 aufeinander zu bewegt. Hierbei kann die jeweilige Lasche 26 die zugehörige Unterbrechung 29 durchdringen, wodurch die in Fig. 6b gezeigte Zwischenposition erreicht wird. In dieser Zwischenposition liegen die Kragen 21, 22 in der Trennebene 16 aneinander an. Diese erste Verstellbewegung gemäß den Pfeilen 33 repräsentiert einen Steckvorgang. An diesen Steckvorgang schließt sich nun ein Schiebevorgang an, bei dem die beiden Halbschalen 14, 15 entsprechend Pfeilen 34 parallel zur Trennebene 16 gegeneinander bewegt werden, so dass die jeweilige Lasche 26 den zugehörigen Kragenabschnitt 28 übergreifen kann. Am Ende dieser Schiebebewegung gemäß den Pfeilen 34, liegt die Relativlage gemäß Fig. 6c vor, welche eine Endposition oder einen fertig montierten Zustand repräsentiert.

## Patentansprüche

1. Schalldämpfer für eine Abgasanlage (2) einer Brennkraftmaschine, insbesondere eines Kraftfahrzeugs,
- mit einem Schalldämpfergehäuse (3), das einen Gehäuseinnenraum (5) umschließt,
- mit mindestens einem im Gehäuseinnenraum (5) angeordneten abgasführenden Hohlkörper (4) in Halbschalenbauweise,
- wobei die beiden Halbschalen (14, 15) des Hohlkörpers (4) im Bereich einer Trennebene (16) aneinander befestigt sind,
- wobei die beiden Halbschalen (14, 15) durch Befestigungselemente (17, 18), die unmittelbar an den Halbschalen (14, 15) ausgebildet sind, aneinander befestigt sind,
- wobei die beiden Halbschalen (14, 15) im Bereich der Trennebene (16) an voneinander entfernten Seiten (19, 20) jeweils einen nach außen abstehenden Kragen (21, 22) aufweisen, an denen die Befestigungselemente (17, 18) ausgebildet sind,
- wobei die beiden Halbschalen (14, 15) an diesen Kragen (21, 22) aneinander anliegen und aneinander befestigt sind,
- wobei zumindest einer der Kragen (21) eine von der Trennebene (16) beabstandete Lasche (26) als Befestigungselement (17) aufweist, die sich parallel zur Trennebene (16) in der Längsrichtung (27) des jeweiligen Kragens (21) erstreckt und dabei den zugehörigen Kragen (22) der anderen Halbschale (15) in einem als komplementäres Befestigungselement (18) dienenden Kragenabschnitt (28) übergreift,
**dadurch gekennzeichnet,**
**dass** die jeweilige Lasche (26) des einen Kragens (21) mit dem zugehörigen Kragenabschnitt (28) des anderen Kragens (22) einen Verschluss bildet, bei dem die beiden Halbschalen (14, 15) zum Befestigen der beiden Halbschalen (14, 15) aneinander oder zum Lösen der beiden Halbschalen (14, 15) voneinander zwei unterschiedlich orientierte Bewegungen durchführen.

2. Schalldämpfer nach Anspruch 1,
**dadurch gekennzeichnet,**
**dass** die beiden Halbschalen (14, 15) ohne separate Befestigungsmittel aneinander befestigt sind.

3. Schalldämpfer nach Anspruch 1 oder 2,
**dadurch gekennzeichnet,**
**dass** der zugehörige Kragen (22) der anderen Halbschale (15) zumindest eine Unterbrechung (29) aufweist, durch welche die Lasche (26) beim Zusammenbau des Hohlkörpers (4) quer zur Längsrichtung (27) des Kragens (22) hindurchführbar ist.

4. Schalldämpfer nach Anspruch 3,
**dadurch gekennzeichnet,**
**dass** die jeweilige Unterbrechung (29) an einer vom gasführenden Inneren des Hohlkörpers (4) abgewandten Außenseite seitlich offen ist.

5. Schalldämpfer nach einem der Ansprüche 1 bis 4,
**dadurch gekennzeichnet,**
**dass** die jeweilige Lasche (26) bezüglich der Längsrichtung (27) des jeweiligen Kragens (22) einen Anfangsbereich (30) oder einen Endbereich des zugehörigen Kragens (22) der anderen Halbschale (15) übergreift.

6. Schalldämpfer nach einem der Ansprüche 1 bis 5,
**dadurch gekennzeichnet,**
**dass** die jeweilige Lasche (26) den zugehörigen Längsabschnitt (28) in der Längsrichtung (27) übergreift.

7. Schalldämpfer nach einem der Ansprüche 1 bis 6,
**dadurch gekennzeichnet,**
**dass** die jeweilige Lasche (26) den zugehörigen Längsabschnitt (28) ausschließlich in der Längsrichtung (27) übergreift.

8. Schalldämpfer nach einem der Ansprüche 1 bis 7,
**dadurch gekennzeichnet,**
**dass** die jeweilige Lasche (26) am zugehörigen Längsabschnitt (28) kraftschlüssig und/oder formschlüssig festgelegt ist.

9. Schalldämpfer nach einem der Ansprüche 1 bis 8,
**dadurch gekennzeichnet,**
**dass** der zugehörige Kragen (22) der anderen Halbschale (15) in dem von der Lasche (26) übergriffenen Kragenabschnitt (28) einen senkrecht zur Trennebene (16) in Richtung zur Lasche (26) abstehenden Vorsprung (31) aufweist.

10. Schalldämpfer nach Anspruch 9,
**dadurch gekennzeichnet,**
- **dass** der Vorsprung (31) durch einen Prägevorgang am jeweiligen Kragen (22) ausgebildet ist, und/oder
- **dass** die jeweilige Lasche (26) eine Rastkontur (32) aufweist, die mit dem jeweiligen Vorsprung (31) verrastet ist.

11. Schalldämpfer nach einem der Ansprüche 1 bis 10,
**dadurch gekennzeichnet,**
**dass** die jeweilige Lasche (26) vom jeweiligen Kragen (21) ausgestellt ist.

12. Schalldämpfer nach einem der Ansprüche 1 bis 11,
**dadurch gekennzeichnet,**
**dass** mehrere Laschen (26) am selben Kragen (21) in der Längsrichtung (27) des Kragens (21) voneinander beabstandet angeordnet sind.

13. Schalldämpfer nach einem der Ansprüche 1 bis 12,
**dadurch gekennzeichnet,**
**dass** jeder Kragen (21) der einen Halbschale (14) mindestens eine Lasche (26) aufweist.

14. Schalldämpfer nach einem der Ansprüche 1 bis 13,
**dadurch gekennzeichnet,**
**dass** jeder Kragen (21) der einen Halbschale (14) mindestens zwei Laschen (26) aufweist, während die Kragen (22) der anderen Halbschale (15) jeweils mindestens eine Unterbrechung (29) aufweisen.

15. Schalldämpfer nach einem der Ansprüche 1 bis 14,
**dadurch gekennzeichnet,**
- **dass** der Hohlkörper (4) zumindest einen Abgaseinlass (24) und zumindest einen Abgasauslass (25) aufweist, die jeweils von der Trennebene (16), vorzugsweise hälftig, geteilt sind, und/oder
- **dass** die beiden Halbschalen (14, 15) unmittelbar den jeweiligen Abgaseinlass (24) und den jeweiligen Abgasauslass (25) definieren, und/oder
- **dass** der jeweilige Hohlkörper (4) ein gerades Rohr oder ein gebogenes Umlenkrohr oder ein Y-Rohr oder ein X-Rohr ist.

## Claims

1. Silencer for an exhaust system (2) of an internal combustion engine, in particular of a motor vehicle,
- comprising a silencer housing (3), which encloses a housing interior (5)
- comprising at least one exhaust-gas-carrying hollow body (4) in a half-shell construction, arranged in the housing interior (5),
- the two half shells (14, 15) of the hollow body (4) being fastened to each other in the region of a separating plane (16),
- the two half shells (14, 15) being fastened to each other by fastening elements (17, 18), which are formed directly on said half shells (14, 15),
- the two half shells (14, 15) each comprising in the region of the separating plane (16), on faces (19, 20) which are remote from each other, an outwardly projecting collar (21, 22) on which the fastening elements (17, 18) are formed,
- the two half shells (14, 15) being in contact with each other and being fastened to each other at said collars (21, 22),
- at least one of the collars (21) having as a fastening element (17) a bracket (26) which is spaced apart from the separating plane (16), which bracket extends in parallel with the separating plane (16) in the longitudinal direction (27) of each collar (21) and overlaps the corresponding collar (22) of the other half shell (15) in a collar portion (28) acting as a complementary fastening element (18),
**characterised in that** each bracket (26) of the one collar (21), together with the corresponding collar portion (28) of the other collar (22), forms a closure, in which the two half shells (14, 15) carry out two differently oriented movements in order to fasten the two half shells (14, 15) to each other or to detach the two half shells (14, 15) from each other.

2. Silencer according to claim 1, **characterised in that** the two half-shells (14, 15) are fastened to each other without using separate fastening means.

3. Silencer according to either claim1 or claim 2, **characterised in that** the corresponding collar (22) of the other half shell (15) comprises at least one interruption (29), through which the bracket (26) can be passed during assembly of the hollow body (4), transversely to the longitudinal direction (27) of the collar (22).

4. Silencer according to claim 3, **characterised in that** each interruption (29) is open laterally on an outer side remote from the gas-carrying interior of the hollow body (4).

5. Silencer according to any of claims 1 to 4, **characterised in that**, relative to the longitudinal direction (27) of the respective collar (22), each bracket (26) overlaps a start region (30) or an end region of the corresponding collar (22) of the other half shell (15).

6. Silencer according to any of claims 1 to 5, **characterised in that** each bracket (26) overlaps the corresponding longitudinal portion (28) in the longitudinal direction (27).

7. Silencer according to any of claims 1 to 6, **characterised in that** each bracket (26) overlaps the corresponding longitudinal portion (28) only in the longitudinal direction (27).

8. Silencer according to any of claims 1 to 7, **characterised in that** each bracket (26) is fixed to the corresponding longitudinal portion (28) with a force fit and/or interlocking fit.

9. Silencer according to any of claims 1 to 8, **characterised in that** the corresponding collar (22) of the other half shell (15) in the collar portion (28) which is overlapped by the bracket (26) comprises a projection (31) which protrudes perpendicularly to the separating plane (16) towards said bracket (26).

10. Silencer according to claim 9, **characterised in that**
- the projection (31) is formed by an embossing process on each collar (22), and/or
- each bracket (26) comprises a locking contour (32) which is locked with the respective projection (31).

11. Silencer according to any of claims 1 to 10, **characterised in that** each bracket (26) flares out from the respective collar (21).

12. Silencer according to any of claims 1 to 11, **characterised in that** a plurality of brackets (26) are arranged on the same collar (21) so as to be spaced apart from one another in the longitudinal direction (27) of said collar (21).

13. Silencer according to any of claims 1 to 12, **characterised in that** each collar (21) of the one half shell (14) comprises at least one bracket (26).

14. Silencer according to any of claims 1 to 13, **characterised in that** each collar (21) of the one half shell (14) comprises at least two brackets (26), whereas the collar (22) of the other half shell (15) comprises in each case at least one interruption (29).

15. Silencer according to any of claims 1 to 14, **characterised in that**
- the hollow body (4) comprises at least one exhaust gas inlet (24) and at least one exhaust gas outlet (25), which in each case are divided, preferably equally, by the separating plane (16), and/or
- the two half-shells (14, 15) directly define the respective exhaust gas inlet (24) and the respective exhaust gas outlet (25), and/or
- each hollow body (4) is a straight pipe or a curved pipe or a Y-pipe or an X-pipe.

## Revendications

1. Silencieux pour une installation de gaz d'échappement (2) d'un moteur à combustion interne, en particulier d'un véhicule automobile,
- avec un carter de silencieux (3) qui cerne une chambre intérieure de carter (5),
- avec au moins un corps creux (4) de guidage des gaz d'échappement, de structure en demi-coques, disposé dans la chambre intérieure de carter (5),
- les deux demi-coques (14, 15) du corps creux (4) étant fixées l'une à l'autre dans la zone d'un plan de séparation (16),
- les deux demi-coques (14, 15) étant fixées l'une à l'autre par des éléments de fixation (17, 18) qui sont formés directement au niveau des demi-coques (14, 15),
- les deux demi-coques (14, 15) présentant respectivement dans la zone du plan de séparation (16), au niveau de côtés (19, 20) distants l'un de l'autre, un collet (21, 22) saillant vers l'extérieur, au niveau desquels les éléments de fixation (17, 18) sont formés,
- les deux demi-coques (14,15) étant juxtaposées l'une à l'autre et fixées l'une à l'autre au niveau de ce collet (21, 22),
- tout au moins un des collets (21) présentant, comme élément de fixation (17), une languette (26), distante du plan de séparation (16) et qui s'étend parallèlement au plan de séparation (16) dans le sens longitudinal (27) du collet (21) respectif et qui chevauche de ce fait le collet (22) correspondant de l'autre demi-coque (15) dans une section de collet (28) servant d'élément de fixation (18) complémentaire,
**caractérisé en ce que**
la languette (26) respective d'un des collets (21) forme avec la section de collet (28) correspondante de l'autre collet (22) une fermeture, dans le cas de laquelle les deux demi-coques (14, 15) exécutent deux mouvements orientés différemment selon qu'il s'agit de fixer les deux demi-coques (14, 15) l'une à l'autre, ou de séparer les deux demi-coques (14, 15) l'une de l'autre.

2. Silencieux selon la revendication 1,
**caractérisé en ce que**
les deux demi-coques (14, 15) sont fixées l'une à l'autre sans moyen de fixation séparé.

3. Silencieux selon la revendication 1 ou 2,
**caractérisé en ce que**
le collet (22) correspondant de l'autre demi-coque (15) présente tout au moins une interruption (29), à travers laquelle la languette (26) peut passer transversalement au sens longitudinal (27) du collet (22), lors de l'assemblage du corps creux (4).

4. Silencieux selon la revendication 3,
**caractérisé en ce que**
l'interruption (29) respective est ouverte latéralement au niveau d'un côté externe opposé à l'intérieur du conduit de guidage des gaz du corps creux (4).

5. Silencieux selon l'une des revendications 1 à 4,
**caractérisé en ce que**
la languette (26) respective chevauche, par rapport au sens longitudinal (27) du collet (22) respectif, une zone initiale (30) ou une zone finale du collet (22) correspondant de l'autre demi-coque (15).

6. Silencieux selon l'une des revendications 1 à 5,
**caractérisé en ce que**
la languette (26) respective chevauche la section longitudinale (28) correspondante dans le sens longitudinal (27).

7. Silencieux selon l'une des revendications 1 à 6,
**caractérisé en ce que**
la languette (26) respective chevauche la section longitudinale (28) correspondante exclusivement dans le sens longitudinal (27).

8. Silencieux selon l'une des revendications 1 à 7,
**caractérisé en ce que**
la languette (26) respective est fixée au niveau de la section longitudinale (28) correspondante par coopération de forces et/ou par ajustement de formes.

9. Silencieux selon l'une des revendications 1 à 8,
**caractérisé en ce que**
le collet (22) correspondant de l'autre demi-coque (15) présente, dans la section de collet (28) chevauchée par la languette (26), une partie saillante (31) vers l'extérieur dans le sens de la languette (26) et perpendiculaire au plan de séparation (16)

10. Silencieux selon la revendication 9,
**caractérisé en ce que**
- la partie saillante (31) est formée par un processus de marquage sur le collet (22) respectif et/ou
- la languette (26) respective présente un contour d'encliquetage (32) qui est encliqueté avec la partie saillante (31) respective.

11. Silencieux selon l'une des revendications 1 à 10,
**caractérisé en ce que**
la languette (26) respective est exposée par le collet (21) respectif.

12. Silencieux selon l'une des revendications 1 à 11,
**caractérisé en ce que**
plusieurs languettes (26) sont disposées à distance les unes des autres au niveau du même collet (21), dans le sens longitudinal (27) du collet (21).

13. Silencieux selon l'une des revendications 1 à 12,
**caractérisé en ce que**
chaque collet (21) d'une des demi-coques (14) présente au moins une languette (26).

14. Silencieux selon l'une des revendications 1 à 13,
**caractérisé en ce que**
chaque collet (21) d'une demi-coque (14) présente au moins deux languettes (26), tandis que les collets (22) de l'autre demi-coque (15) présentent respectivement au moins une interruption (29).

15. Silencieux selon l'une des revendications 1 à 14,
**caractérisé en ce que**
- le corps creux (4) présente tout au moins une entrée de gaz d'échappement (24) et tout au moins une sortie de gaz d'échappement (25) qui sont respectivement séparées, de préférence pour moitié, du plan de séparation (16) et/ou
- les deux demi-coques (14, 15) définissent directement l'entrée de gaz d'échappement (24) respective et la sortie de gaz d'échappement (25) respective, et/ou
- le corps creux (4) respectif est un tube rectiligne, ou un tube de déviation coudé, ou un tube en Y ou un tube en X.
